# EUROPEAN PATENT APPLICATION

(11) **EP 3 757 868 A1**
(43) Date of publication of application: **30.12.2020**
(21) Application number: 19182412.7
(22) Date of filing: 25.06.2019
(51) Int. Cl.: G06K 9/00

(54) **METHOD, DEVICE AND COMPUTER PROGRAM PRODUCT FOR CLASSIFYING AN OBSCURED OBJECT IN AN IMAGE**

(71) Applicant: Inter IKEA Systems B.V., 2616 LN Delft (NL)
(72) Inventor: Gustavsson, Jonas, 234 32 LOMMA (SE); Haynes, Kip, 217 42 MALMÖ (SE)
(74) Representative: Ström & Gulliksson AB

(57) **Abstract**

The disclosure relates to image recognition, in particular it relates to a method for classifying an obscured object, by identifying an object in an image as an obscured object, calculating a 3D space for the image, defining a 3D coordinate for the obscured object, retrieving a plurality of 3D models from a first database, rendering a 2D model of each one of the retrieved 3D models, calculating a similarity score between the rendered 2D representation and the obscured object, and classifying the obscured object as the object of the 3D model for which a highest similarity score was determined. The disclosure further relates to a device and a computer readable program for carrying out such a method.

## Description

### Field of the invention

The present disclosure relates to the field of image search and image recognition, in particular, it relates to a method for classifying obscured objects in an image. The disclosure also relates to a device for performing such method. The disclosure also relates to a computer program product code including instructions to perform such a method.

### Background art

In image search approaches, it is often desirous to determine and identify which objects are present in an image. Image search approaches and image recognition approaches are common for commercial use, for example to generate product catalogues and product suggestions. It has been desirous to achieve a system where a user can take a photograph of a room, where the image search process can use image data to search product catalogues on the internet to return for example different stores' prices for a given product.

However, rooms and furnishing of a room is often arranged so that all objects are not free standing from all perspective viewpoints, and thus difficult to identify. Typically, not all objects in an image can be recognized. Some objects are often difficult to search due to objects being placed too close to one another, or in direct contact with one another. A typical image can be said to have disruptions in the form of unclear parts of the image. A disruption may be a partly hidden or obscured object having a position behind another object. A disruption may also be a partly obscured object. As a consequence, both the object in front of an obscured object or the obscured object may be difficult to identify and classify. Following a disruption in an image, the accuracy of the image search/recognition algorithm is reduced.

Therefore, there is room for improvements in the field of image search approaches and image recognition approaches.

### Summary of the invention

In view of that stated above, the object of the present invention is to provide a method for image recognition that mitigates at least some of the problems discussed above. In particular, it is an object of the present disclosure to provide a method for recognizing an obscured or partly hidden object, and to classify such an obscured or partly hidden object. Further and/or alternative objects of the present invention will be clear for the reader of this disclosure.

According to a first aspect, there is provided a method for classifying an obscured object in an image, the method comprising the steps of:
identifying an obscured object in the image by:
   classifying objects in the image using an image search algorithm having an accuracy threshold value; and
   identifying the obscured object as an object falling below the accuracy threshold value;
calculating a 3D coordinate space of the image;
defining a 3D coordinate for the obscured object using the 3D coordinate space of the image;
retrieving a plurality of 3D models of objects from a first database for each 3D model of the plurality of 3D models:
   defining a value for a translation parameter and for a scale parameter for the 3D model corresponding to the 3D coordinate of the obscured object in the 3D coordinate space of the image;
   for a plurality of values for a rotation parameter of the 3D model:
      rendering a 2D representation of the 3D model having the defined values of the translation parameter and the scale parameter and the value of the rotation parameter;
      calculating a similarity score between the rendered 2D representation and the obscured object;
determining a highest similarity score calculated for the plurality of 3D models;
upon determining that the highest similarity score exceeds a threshold similarity score, classifying the obscured object as the object of the 3D model for which the highest similarity score was determined.

Objects in the image are segmented (extracted, distinguished, etc.,) using any known algorithm, such as algorithms using one or more of edge features, binary patterns, directional patterns, Gradient features, SpatioTemporal domain features etc.

By the term "obscured object", should in the context of the present specification, be understood as a partly hidden object, or an object that is not fully visible from the viewpoint. The obscured object may have an object in front of it, or on top of it, or be located at the edge of the image, etc.. Such an object may in some cases not be recognized/classified using an image search algorithm.

By the term "image search algorithm", should in the context of the present specification, be understood as any known way to search for images (of objects) in a database which are similar to an object of the image and use the outcome (e.g. labels/classification of similar images found in the database) to classify the object. Examples of known commercial image search algorithms at the filing of this disclosure comprises Google images, TinEye and Alibabas Pailitao.

The provided method is an improved method for identifying and classifying obscured objects in an image. By first classifying objects in the image using an image search algorithm having an accuracy threshold value, and then identifying the obscured object as an object falling below the accuracy threshold value, valuable time and processing power needed in order to classify all objects within an image are saved.

By comparing an identified obscured object in an image with a database of 3D models, a low-complexity model is provided for classifying the obscured object. By using 3D models as defined herein, the classification may be done independently of the field of view of the image, and the position of the obscured object in the 3D coordinate space of the image. By rotating the 3D model, which have a translation parameter and for a scale parameter for the 3D model corresponding to the 3D coordinate of the obscured object in the 3D coordinate space of the image, and for each rotation value calculating a similarity score between the rendered 2D representation and the obscured object, a more accurate classification of the obscured object is achieved. A more robust classification of obscured objects in an image may thus be achieved.

Any suitable algorithm may be used for calculating and similarity score between the rendered 2D representation and the obscured object. For example, a pixel by pixel comparison may be used. In other embodiments, edges of the 2D representation and the obscured object are extracted and compared to calculate a similarity score. In another example, the similarity score may be calculated through feature extraction, for example by comparing a sub-set of pixels in the image, i.e. a feature, to a reference source. The feature may by way of example be a specific pattern identified in the image.

The use of a similarity score and the accuracy threshold value increases the possibility that a proper match is found when classifying the obscured object.

The similarity score and the accuracy threshold value reduces the risk of faulty classification of an obscured object. If the exact match cannot be generated, the closest classification is generated having a high similarity score (above the accuracy threshold value) and thus a high correlation to the obscured object. The accuracy threshold value may be any suitable value depending on the implementation. For example, the accuracy threshold value may represent a 60, 75, 80 or 90% correlation between the 3D model and the obscured object.

According to some embodiments, the method further comprises the steps of:
verifying the classification of the obscured object by:
   inputting the 2D representation of the 3D model resulting in the highest similarity score image to the image search algorithm,
   upon the 2D representation exceeding the accuracy threshold value, verifying the classification of the obscured object, and
   upon the 2D representation below the accuracy threshold value, not verifying the classification of the obscured object.

By verifying the classification of the obscured object according to this embodiment, a higher accuracy for the classification may be achieved. By using a search algorithm mainly focusing on 2D recognition, the higher accuracy for the classification of the obscured object may be achieved in a low complexity way, using e.g. known and efficient 2D image search algorithms as exemplified above.

In some embodiments, an unverified classification means that a user is informed that no classification was made. In other embodiments, an unverified classification means that the user is informed that the classification is uncertain. In some embodiments, the user may then perform verification of the uncertain classification or inform the system that the classification was indeed not correct.

According to some embodiments, the method comprises the step of determining an object type of the obscured object. By determining the object type for the object, the method may classify the obscured object in a more efficient manner. By determining the object type, the retrieval of the plurality of 3D models may be based on the object type. For example, if the object type is deemed to be utensils, the retrieved plurality of 3D models may not contain for example chairs, thus saving time during calculations.

According to some embodiments, the image depicts a scene, and the method further comprises determining a context for said depicted scene, and wherein the object type is determined based on the context. By way of example, the context may for instance be a living room, if typical living room objects such as a sofa, a coffee table and an arm chair is identified. It is to be noted that there are a variety of contexts, for example a hall way, a bed room, garden etc. Hence, the context may be determined based on the already classified objects recognized in the image. By determining a context, retrieval of the plurality of 3D models may be adapted to only retrieve 3D models that would be appropriate for the context. Thus, there is no need to compare a 3D model of a bed, if the context is determined to be a bathroom or a garden. Advantageously, processing time for may be reduced.

According to some embodiments, the object type is further determined based on the 3D coordinate of the obscured object in the depicted scene. By way of example, the method may determine the object type as an object hanging on a wall, or sitting on a table, based on its 3D coordinate. By determining a 3D coordinate of the obscured object, the object type may be determined in an efficient manner and less processing power is required to classify the obscured object.

According to some embodiments, the object type is determined based on the size of the obscured object, the color of the obscured object, or the shape of the obscured object. Advantageously, a limited plurality of 3D models may be retrieved providing a method requiring a lesser amount of processing power to classify the obscured object.

According to some embodiments, the step of retrieving the plurality of 3D models comprises filtering the first database to retrieve a selected plurality of 3D models corresponding to the determined object type. By filtering the first database, the retrieval of the plurality of 3D models may become more efficient. Advantageously, a lesser amount of processing power is needed to classify the obscured object. The filter may be determined as described above, e.g. by defining the context to be a bed room and include the bed room definition as a filter in the request to the first database for 3D models.

According to some embodiments, the method further comprises:
requesting input from a user pertaining to the object type of the obscured object, and
receiving an input from the user, and wherein the step of determining the object type is based on the input.

By utilizing a user input, the processing power needed to classify the obscured object may be lessened. A user input may allow the classification method to omit processing steps, leading to a more efficient method for classifying an obscured object in an image. The user input may be requested and received in any known manner such as using a graphical user interface, a voice interface, etc..

According to some embodiments, the plurality of values for a rotation parameter of the 3D model defines a rotation of the 3D model around a single axis in the 3D coordinate space. By defining the rotation around a single axis, lesser processing power may be needed to classify the obscured object, since fewer 2D representations of the 3D model may need to be rendered and compared to the obscured object to determine similarity.

According to some embodiments, the axis is determined by calculating a plane in the 3D coordinate space of the image on which the obscured object is placed; and defining the axis as an axis being perpendicular to said plane. Advantageously, a more accurate classification of the obscured object may be achieved. The rotation of the object may have a more accurate rotational direction depending on the location and context of the obscured object in the image, resulting in a quicker match.

According to some embodiments, the method further comprises
extracting image data corresponding to the obscured object from the image,
adding the extracted image data as an image to be used by the image search algorithm, the added image being associated with the object of the 3D model for which the highest similarity score was determined. By this, the database may be updated in such a way as to improve future uses of the method, since the chances of classifying the object in a further image using the image search algorithm may be increased. In other words, by adding a new image to the database or similar which is used by the image search algorithm, the accuracy of classifying the same object another time may be higher.

According to some embodiments, the image search algorithm uses a second database comprising a plurality of 2D images, each 2D image depicting one of the objects of the 3D models comprised in the first database, wherein the image search algorithm maps image data extracted from the image and defining an object to the plurality of 2D images in the second database to classify objects in the image, each classification having an accuracy value. By this, a higher accuracy may be achieved for the classification when classifying the obscured object. As discussed above, many known algorithms for image search using 2D images exist and can be employed.

According to a second aspect, at least some of the above object are achieved by a device for classifying an obscured object in an image, the device comprising one or more processors configured to:
identify an obscured object in the image by:
   classify objects in the image using an image search algorithm having an accuracy threshold value; and
   identify the obscured object as an object falling below the accuracy threshold value;
calculate a 3D coordinate space of the image;
define a 3D coordinate for the obscured object using the 3D coordinate space of the image;
retrieve a plurality of 3D models of objects from a first database;
for each 3D model of the plurality of 3D models:
   define a value for a translation parameter and for a scale parameter for the 3D model corresponding to the 3D coordinate of the obscured object in the 3D coordinate space of the image;
   for a plurality of values for a rotation parameter of the 3D model:
      render a 2D representation of the 3D model having the defined values of the translation parameter and the scale parameter and the value of the rotation parameter; and to
      calculate a similarity score between the rendered 2D representation and the obscured object
determine a highest similarity score calculated for the plurality of 3D models;
upon determining that the highest similarity score exceeds a threshold similarity score, classify the obscured object as the object of the 3D model for which the highest similarity score was determined.

According to some embodiments, the device further comprises a transceiver configured to:
receive an image from a mobile device,
wherein the transceiver is further configured to, upon determining, by the one or more processors, that the highest similarity score exceeds the threshold similarity score, transmit data indicating the classification of the obscured object to the mobile device, wherein the transceiver is further configured to, upon determining, by the one or more processors, that the highest similarity score does not exceed the threshold similarity score, transmit data indicating unsuccessful classification of the obscured object. It is to be noted that the transceiver may transmit data through a wired or a wireless connection. The transceiver may transmit data to an end user such that the user may attain the data and or information gathered about the obscured object.

According to a third aspect, at least some of the above objects are obtained by a computer program product comprising computer-readable program code to be executed by one or more processors when retrieved from a non-transitory computer-readable medium, the program code including instructions to:
identify an obscured object in the image by:
   classify objects in the image using an image search algorithm having an accuracy threshold value; and
   identify the obscured object as an object falling below the accuracy threshold value;
calculate a 3D coordinate space of the image;
define a 3D coordinate for the obscured object using the 3D coordinate space of the image;
retrieve a plurality of 3D models of objects from a first database for each 3D model of the plurality of 3D models:
   define a value for a translation parameter and for a scale parameter for the 3D model corresponding to the 3D coordinate of the obscured object in the 3D coordinate space of the image;
   for a plurality of values for a rotation parameter of the 3D model:
      render a 2D representation of the 3D model having the defined values of the translation parameter and the scale parameter and the value of the rotation parameter
      calculate a similarity score between the rendered 2D representation and the obscured object
determine a highest similarity score calculated for the plurality of 3D models;
upon determining that the highest similarity score exceeds a threshold similarity score, classify the obscured object as the object of the 3D model for which the highest similarity score was determined.

The second and third aspects may generally have the same features and advantages as the first aspect.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief Description of the Drawings

The above, as well as additional objects, features and advantages of the present invention, will be better understood through the following illustrative and non-limiting detailed description of preferred embodiments of the present invention, with reference to the appended drawings, where the same reference numerals will be used for similar elements.
Figure 1 illustrates an image of a room having free standing and obscured objects.
Figure 2 illustrates some objects from the image of figure 1.
Figure 3 illustrates a plurality of 3D models.
Figure 4A illustrates a similarity score between a first obscured object of figure 1 and two 3D models.
Figure 4B illustrates a similarity score between a third obscured object of figure 1 and a 3D model.
Figure 5 illustrates a similarity score between a second obscured object of figure 1 and two 3D models.
Figure 6 illustrates a schematic view of data transfers of an embodiment of a device for carrying out the method.
Figure 7 illustrates a flow chart of a method for classification of an obscured object according to embodiments.

### Description of Embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

It will be appreciated that the present invention is not limited to the embodiments shown. Several modifications and variations are thus conceivable within the scope of the invention which thus is exclusively defined by the appended claims.

Image recognition is a common tool for searching and scanning images to identify and classify objects within said image. The aim of an image recognition algorithm (sometimes called image classification algorithms) is to return information about different objects that are present in an image. As previously mentioned, there are limitations to the typically used methods and programs for classifying objects within an image. Some objects may not be fully visible in the image and are thus difficult to classify due to the distortion.

When an object in an image is not fully visible it may be partly hidden, such an object is said to be an obscured object. Since part of the object is not visible from the viewpoint, it has to be taken into consideration that the object may not look as it is perceived from the viewpoint.

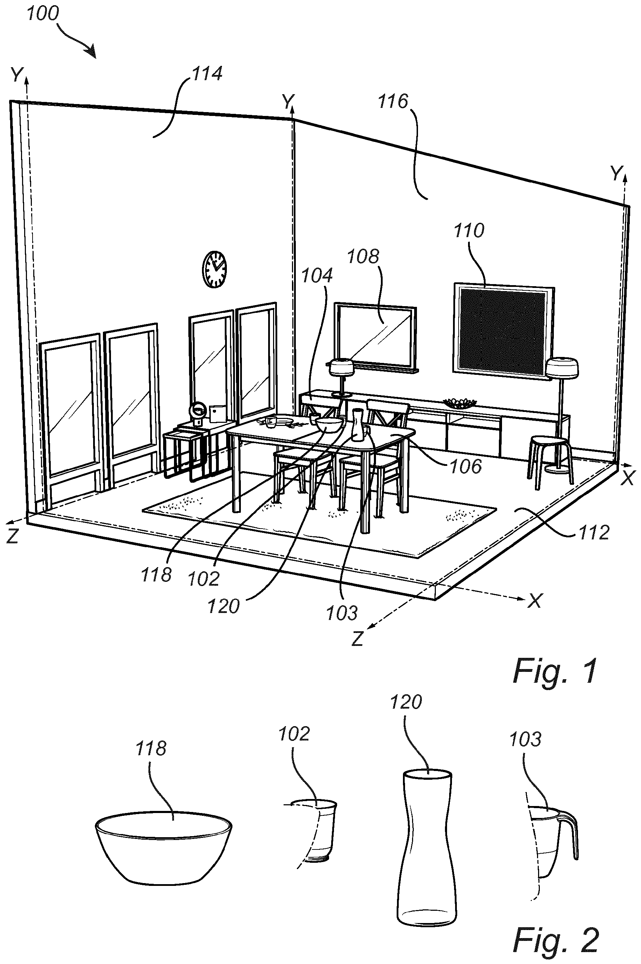

The method will hereafter be described with reference to figures 1-7.

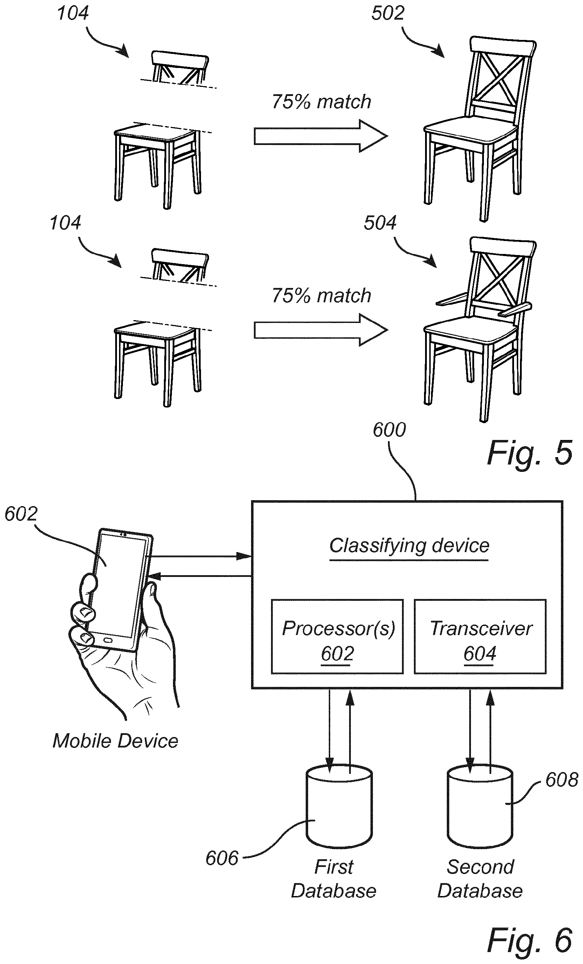

With reference to Fig. 1, a room/scene is disclosed as depicted by an image 100. The image 100 may be captured by a mobile device (smartphone, body worn camera etc.,) 602 and sent to another device for analysis (see below in conjunction with figure 6). The image may thus be captured by a camera device. Any other suitable means for capturing a scene may be used, such as through the use of a virtual reality head device. The image 100 may depict a scene or a setting. The scene may have a context such as for example a living room, a hallway, or a kitchen table. The image 100 comprises a floor 112 extending in a X, Z plane, a first wall 114 extending in a Y, Z plane and a second wall 116 extending in an X, Y plane. The image 100 shows a window 108 and a painting 110 on the second wall 116.

The image 100 further comprises a plurality of objects, free standing objects and obscured objects. A first obscured object 102 is placed on the table 106 behind a visible object, here a bowl 118. A vase 120 is another free standing visible object placed on the table 106. A second obscured object 104, a chair, is placed behind the table 106. A third obscured object 103 is placed on the table 106 partly hidden behind the vase 120.

To classify the obscured objects as a specific object, a device comprising one or more processors can be used. The one or more processors may be configured to execute a computer program product comprising code sections having instructions for a method of how to classify an obscured object.

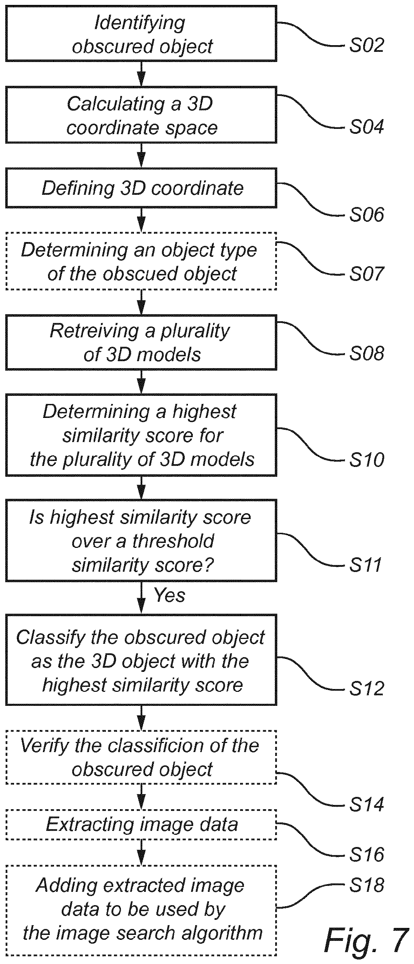

In order to classify and determine what kind of object the first, second, and third obscured objects 102, 104, 103 are, the first, second, and third obscured objects 102, 104, 103 are first to be identified as being obscured objects. Such a method will now be described in conjunction with figure 7. The objects are identified S02 using an image search algorithm having an accuracy threshold value. The accuracy threshold value may by way of example entail color variations, or line variations, view point variations, etc., where it may be difficult to identify an object to a certainty of 100% but where it is likely that the classification by the image search algorithm is correct. Objects that fall above the accuracy threshold value are considered visible objects and are classified using the image search algorithm. As described above, there are many different image search algorithms that may be used. The objects falling below the accuracy threshold are identified as being obscured objects. Thereafter, the process of classifying the obscured object takes place.

Based on the identified and classified objects, in some embodiments a context of the image is determined. The context may for instance be a living room given that the identified objects are for example a sofa, an arm chair, a rug, and a lamp etc. If the identified objects are a shower, a sink and a toilet, the context may be determined to be a bathroom. The context of the scene of the image may constitute the determination S07 of an object type for the obscured object. It is to be noted that there are many different options for how to determine an object type. By determining S07 an object type, the program may need less processing power in order to accurately classify the obscured object 102, 104, 103.

The image 100 may be provided as a 2D image. To classify S12 the identified obscured object, a 3D coordinate space for the image is calculated S04.

To obtain a high accuracy classification of the obscured object, a 3D coordinate space of the image along a X, Y Z plane/direction is thus calculated S04. The 3D coordinate space may be determined S04 through applying an algorithm to the image. It is to be noted that there are many algorithms that may be suitable for calculating S04 a 3D coordinate space. By way of example, the 3D coordinate space may be calculated S04 by applying a Plane detection algorithm, or a RANSAC algorithm, or a Hough algorithm, etc., to the image 100.

With the use of the 3D coordinate space of the image, a 3D coordinate for the obscured object is defined S06, for example using any one of the above example algorithms. The 3D coordinate contains information regarding the location of the obscured object in the image 100. The 3D coordinate may contain information relating to which object type the obscured object is. The 3D coordinate may contain information regarding size of the obscured object. The 3D coordinate of the obscured object may be used to determine S07 the object type. By way of example, the 3D coordinate may contain information regarding the obscured object being placed in a single plane of the 3D coordinate space of the image 100. The obscured object may be in the plane of a wall; thus the object type is an object that is suited to be on a wall. If the obscured object 104 is determined to be placed on a floor, the program will not consider the obscured object as for example a painting or a ceiling lamp. Accordingly, the processing time of the method for classifying an obscured object may be reduced. In some embodiments, the object type is determined S07 based on the size of the obscured object, the color of the obscured object, or the shape of the obscured object. For example, if the obscured object is determined to be a large sized object, the object type may be determined as furniture.

In some embodiments, the program requests an input from a user. The input may be requested with the intention to obtain a user input pertaining to the object type of the obscured object. Accordingly, the device may receive the input made by a user regarding the object type of the obscured object. The user input may be used to determine S07 the object type of the obscured object. By way of example, the user may input that the obscured object is of a 'cup type', or 'suitable to place on a table', etc. The input may in some embodiments pertain to the context of the depicted scene. By way of example, the user may input that the context of the image is a living room, a bed room or a hall way.

The classification of the obscured object is done by comparing the obscured object to a first database (reference 606 in figure 6) containing a catalogue of 3D models of objects. After an object has been identified as an obscure object, the program is configured to retrieve S08 a plurality of 3D models of objects from the first database 606. The first database 606 contains 3D models of objects to which the obscured object can be classified as. The first database 606 may be filtered such that a plurality of 3D models corresponding to the determined object type is retrieved S08 therefrom. The first database 606 may thus be filtered based on the object type, and/or the context and/or an input by user. It is to be noted that the first database 606 may be filtered in many ways. Thus, a selected plurality of 3D models may be retrieved S08. This may reduce the needed processing power of the program and processor executing the program code. The selected plurality of 3D models may as described above be based on the context of the image, or the 3D coordinate of the obscured object, etc..

After the plurality of 3D models is retrieved S08, for each 3D model of the plurality of 3D models, the program defines a value for a translation parameter and for a scale parameter for the 3D model corresponding to the 3D coordinate of the obscured object in the 3D coordinate space of the image. The translation parameter relates to how the 3D model can be moved around in space to match the location of the obscured object. The scale parameter relates to the size of the 3D model in relation to the obscured object. A plurality of values for a rotation parameter of each 3D model in the plurality of 3D model is further determined. The plurality of values for a rotation parameter of the 3D model may define a rotation of the 3D model around a single axis in the 3D coordinate space. The axis may be determined by calculating a plane in the 3D coordinate space of the image on which the obscured is placed and defining the axis as an axis being perpendicular to said plane. In other embodiments, a plurality of axes is used as basis for defining the plurality of values for the rotation parameter.

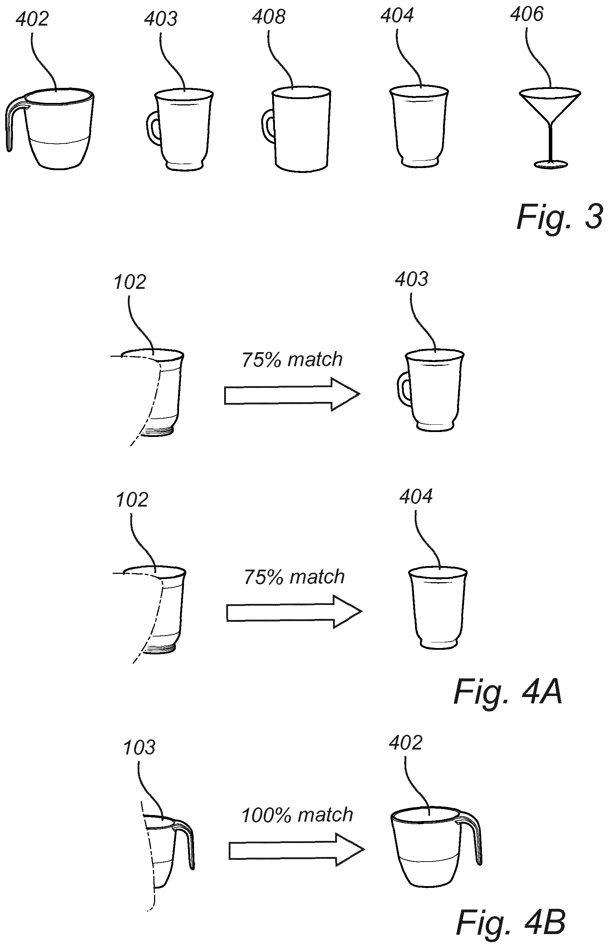

Turning to figs 1-5, by way of example, the first obscured object 102 is placed on the table 106. The vase 120 and the bowl 118 are identified as objects by the image search algorithm. The first obscured object 102 is identified S02 as an obscure object due to falling below the accuracy threshold of the image search algorithm. The object type may be determined S07 to be 'suitable to place on a table'. Thus, the obscured object is fairly small to its size. When the plurality of 3D models is retrieved S08 from the first database 606, only 3D models of objects that could be placed on a table are retrieved. Such a plurality may be similar to the plurality of 3D models shown in figure 3. In the example of the plurality of 3D models shown in figure 3, there is disclosed a mug having a handle 402, a coffee mug 408, a cup with a handle 403, a cup without a handle 404, and a cocktail glass 406.

Accordingly, the axis for rotation of each 3D model of the plurality of 3D model would be in a direction upwards from the table top 110. In a rotation around the single axis, the first obscured object 102 would be turned in a circular rotation in a standing mode. In this example, the first obscured object 102 may be classified S12 as a cup with a handle 403 or without a handle 404, with an accuracy of for example 75%, as is shown in figure 4A. The mug 402, coffee mug 408 and the cocktail glass 406 comprised in the retrieved plurality of 3D models will fall below the similarity score threshold value. In another example, looking at figure 1 the second obscured object 104 seems to be a chair of some sort. Due to the second obscured object 104 being placed behind and under the table 106, there are parts of the chair that are not visible from the viewing perspective. Fig 5 shows an outtake of the visible and obscured parts of the obscured chair 104. There is also disclosed two possible classifications for the second obscured object 104. One classification is a chair without armrests 502 and one classification is a chair with armrests 504. In some embodiments, a user is requested to provide input as to which of the two classifications are correct, e.g. using a GUI of the device capturing the image. Such input may be used to further improve the object classification algorithm described herein.

For each 3D model of the retrieved S08 plurality of 3D models, a value for a translation parameter and for a scale parameter for the 3D model corresponding to the 3D coordinate of the obscured object 102, 103, 104 in the 3D coordinate space are defined. Then, for a plurality of rotation parameters, the program renders a 2D representation of said 3D model having the different parameters. The 2D representation rendered of the 3D model has the defined values of the translation parameter and the scale parameter and the value of the rotation parameter. By comparing the rendered 2D representation with the obscured object, a similarity score between the rendered 2D representation and the obscured object is calculated. For each 3D model of the plurality of 3D models, a highest similarity score is determined. A high similarity score between the obscure object and the 3D model means a better correlation between the obscured object and the 3D model and thus improves the chance of an accurate classification according to the class/definition/product name/etc. of the 3D model. A low similarity score points to the fact that the 3D model does not correspond to the obscured object. The highest similarity score for each 3D model is then used for determining S10 a highest similarity score calculated for the plurality of 3D models.

It should be noted that the above process of calculating a similarity score for each of the retrieved 3D models may be performed in parallel by the device, using parallel computing, or be performed in a distributed manner using a plurality of sub-devices (not shown in figure 6). In other embodiments, the computing is done in a sequence, one 3D model after another.

By way of example using the first obscured 102 object of figure 1, the retrieved plurality of 3D models may be the plurality of 3D models shown in figure 3. The calculation of the comparison between the first obscured object 102 and the cocktail glass 406 will generate a low similarity score. The similarity score calculated for the coffee mug 408 will generate a higher similarity score. The similarity score calculated for the mug with a handle 402 will generate a somewhat high similarity score. The cup with a handle 403 and the cup without a handle 404 will generate the highest similarity score. The similarity scores for both the cup with and without a handle 403, 404 will be determined to have the highest similarity scores for the plurality of 3D models. These highest similarity scores will generate a classification of the first obscured object 102 which is shown in figure 4A.

By way of another example using the third obscured object 103 of figure 1 and the plurality of 3D models presented in figure 3. The calculation of the comparison between the third obscured object 103 and the cocktail glass 406 will generate a low similarity score. The cup without a handle 404 will also generate a low similarity score. This because a handle is part of the visible portion of the third obscured object 103. The coffee mug 408 will generate a higher similarity score due to it comprising a handle. The cup with the handle 406 may generate a higher than zero similarity score due to it comprising a handle. The mug with the handle 402 will generate the highest similarity score out of the plurality of 3D models. The similarity score of the mug with a handle 402 will be determined S10 to be the highest similarity score. This highest similarity score will generate the classification of the third obscured object 103 as the mug with a handle 402 as the obscured object, as is shown in figure 4B.

By comparing and calculating a similarity score between the obscured object and the first database 606 having a vast amount of 3D models, the classification may be done independently of the field of view of the image, and the position/rotation of the obscured object in the 3D coordinate space of the image.

Upon determining S11 that the highest similarity score for all of the retrieved 3D objects 402-408 exceeds a threshold similarity score, the obscured object is classified S12 as the object of the 3D model for which the highest similarity score was determined S10. In other words, the obscured object is classified as the 3D model having the highest similarity score. The threshold similarity score determines whether it is likely that the 3D model is a match to the obscured object. A similarity score below the threshold value represents that it is not likely of the 3D model corresponding to the obscured object.

Image data corresponding to the obscured object may be extracted S16 from the image. This image data may be added S18 as an image to be used by the image search algorithm. In such case, the added image may be associated with the object of the 3D model for which the highest similarity score was determined S10. The image search algorithm may use a second database 608 comprising a plurality of 2D images. Each 2D image may depict one of the objects of the 3D models comprised in the first database 606. It is preferred that for each 3D model, the second database 608 comprises at least a minimum number of different images, such as at least 100, 130, 200, etc., images. When using the second database 608 with the image search algorithm, the image search algorithm maps the image data extracted from the image and defining an object to the plurality of 2D images in the second database 608 to classify objects in the image, each classification having an accuracy value.

In some embodiments, the program comprises code segments that may verify S14 the classification of the obscured object. In such embodiments, the image search algorithm is used to verify S14 the classification of the obscured object. The 2D representation of the 3D model having the highest similarity score is input into the image search algorithm. If the 2D representation exceeds the accuracy threshold value, the object classification is verified. If the 2D representation falls below the accuracy threshold value, the classification of the obscured object is not verified.

In some embodiments the device, or classifying device, 600 comprising one or more processors 602 for performing the method described above further comprises a transceiver 604. The transceiver 604 is configured to receive an image from a mobile device 602 capturing the image. The transceiver 604 is configured to transmit data indicating the classification of the obscured object to the mobile device 602. The transceiver 604 transmits such data upon determining, by the one or more processors, that the highest similarity score exceeds the threshold similarity score. When the highest similarity score does not exceed the threshold similarity score, the transceiver 604 transmits data to the mobile device 602 indicating that the classification of the obscured object was unsuccessful. Thus, the transceiver 604 sends a message to the mobile device 602 containing indications that there was no match for the obscured object in the first database 606 and no classification of the obscured object was achieved. It is to be noted that the transceiver 604 may transmit the data to the mobile device 602 and the first/second database 606, 608 through a wired or through a wireless connection. The transceiver 604 may comprise a plurality of transceivers, or a plurality of separate receivers and transmitters, for communication with the different entities of the system described in figure 6.

The person skilled in the art realizes that the present invention by no means is limited to the preferred embodiments described above. On the contrary, many modifications and variations are possible within the scope of the appended claims. For example, step S07 in figure 7 may be done before or in parallel with any of the steps S04 and S06 of figure 7.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The systems and methods disclosed hereinabove may be implemented as software, firmware, hardware or a combination thereof. In a hardware implementation, the division of tasks between functional units referred to in the above description does not necessarily correspond to the division into physical units; to the contrary, one physical component may have multiple functionalities, and one task may be carried out by several physical components in cooperation. Certain components or all components may be implemented as software executed by a digital signal processor or microprocessor, or be implemented as hardware or as an application-specific integrated circuit. Such software may be distributed on computer readable media, which may comprise computer storage media (or non-transitory media) and communication media (or transitory media). As is well known to a person skilled in the art, the term computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information, and which can be accessed by a computer. Further, it is well known to the skilled person that communication media typically embodies computer readable instructions, data structures, program modules or other data in a modulated data signal such as a carrier wave or other transport mechanism and includes any information delivery media.

## Claims

1. A method for classifying an obscured object in an image, the method comprising the steps of:
identifying (S02) an obscured object (102, 103, 104) in the image (100) by:
classifying objects in the image using an image search algorithm having an accuracy threshold value; and
identifying the obscured object (102, 103, 104) as an object falling below the accuracy threshold value;
calculating (S04) a 3D coordinate space of the image (100);
defining (S06) a 3D coordinate for the obscured object (102, 103, 104) using the 3D coordinate space of the image (100);
retrieving (S08) a plurality of 3D models of objects from a first database (606);
for each 3D model of the plurality of 3D models:
defining a value for a translation parameter and for a scale parameter for the 3D model corresponding to the 3D coordinate of the obscured object (102, 103, 104) in the 3D coordinate space of the image;
for a plurality of values for a rotation parameter of the 3D model:
rendering a 2D representation of the 3D model having the defined values of the translation parameter and the scale parameter and the value of the rotation parameter
calculating a similarity score between the rendered 2D representation and the obscured object (102, 103, 104)
determining (S10) a highest similarity score calculated for the plurality of 3D models;
upon determining (S11) that the highest similarity score exceeds a threshold similarity score, classifying (S12) the obscured object (102, 103, 104) as the object of the 3D model for which the highest similarity score was determined.

2. Method according to claim 1, further comprising the steps of:
verifying (S14) the classification of the obscured object (102, 103, 104) by:
inputting the 2D representation of the 3D model resulting in the highest similarity score image to the image search algorithm,
upon the 2D representation exceeding the accuracy threshold value, verifying the classification of the obscured object (102, 103, 104), and
upon the 2D representation below the accuracy threshold value, not verifying the classification of the obscured object (102, 103, 104).

3. Method according to any one of the previous claims, further comprising the step of determining (S07) an object type of the obscured object (102, 103, 104).

4. Method according to claim 3, wherein the image depicts a scene, and wherein the method further comprises the step of determining a context for said depicted scene, and wherein the object type is determined (S07) based on the context.

5. Method according to claim 4, wherein the object type is further determined based on the 3D coordinate of the obscured object (102, 103, 104) in the depicted scene.

6. Method according to any one of claims 3-5, wherein the object type is determined (S07) based on the size of the obscured object (102, 103, 104), the color of the obscured object, or the shape of the obscured object.

7. Method according to any one of claims 3-6, wherein the step of retrieving the plurality of 3D models comprises filtering the first database (606) to retrieve a selected plurality of 3D models corresponding to the determined object type.

8. Method according to any one of claims 3-7, further comprising:
requesting input from a user pertaining to the object type of the obscured object,
receiving an input from the user, and wherein the step of determining (S07) the object type is based on the input.

9. Method according to any one of the previous claims, wherein the plurality of values for a rotation parameter of the 3D model defines a rotation of the 3D model around a single axis in the 3D coordinate space.

10. Method according to claim 9, wherein the axis is determined by calculating a plane in the 3D coordinate space of the image on which the obscured object (102, 103, 104) is placed; and defining the axis as an axis being perpendicular to said plane.

11. Method according to any one of the previous claims, further comprising
extracting (S16) image data corresponding to the obscured object (102, 103, 104) from the image,
adding (S18) the extracted image data as an image to be used by the image search algorithm, the added image being associated with the object of the 3D model for which the highest similarity score was determined.

12. Method according to any one of the previous claims, wherein the image search algorithm uses a second database (608) comprising a plurality of 2D images, each 2D image depicting one of the objects of the 3D models comprised in the first database (606), wherein the image search algorithm maps image data extracted from the image and defining an object to the plurality of 2D images in the second database (608) to classify objects in the image, each classification having an accuracy value.

13. A device (600) for classifying an obscured object in an image, the device comprising one or more processors (602) configured to:
identify (S02) an obscured object (102, 103, 104) in the image (100) by:
classify objects in the image using an image search algorithm having an accuracy threshold value; and
identify the obscured object (102, 103, 104) as an object falling below the accuracy threshold value;
calculate (S04) a 3D coordinate space of the image (100);
define (S06) a 3D coordinate for the obscured object (102, 103, 104) using the 3D coordinate space of the image;
retrieve (S08) a plurality of 3D models of objects from a first database (606);
for each 3D model of the plurality of 3D models:
define a value for a translation parameter and for a scale parameter for the 3D model corresponding to the 3D coordinate of the obscured object (102, 103, 104) in the 3D coordinate space of the image;
for a plurality of values for a rotation parameter of the 3D model:
render a 2D representation of the 3D model having the defined values of the translation parameter and the scale parameter and the value of the rotation parameter; and to
calculate a similarity score between the rendered 2D representation and the obscured object (102, 103, 104)
determine (S10) a highest similarity score calculated for the plurality of 3D models;
upon determining (S11) that the highest similarity score exceeds a threshold similarity score, classify (S12) the obscured object as the object (102, 103, 104) of the 3D model for which the highest similarity score was determined.

14. The device of claim 13, further comprising a transceiver (604) configured to:
receive an image from a mobile device (602),
wherein the transceiver (604) is further configured to, upon determining (S11), by the one or more processors, that the highest similarity score exceeds the threshold similarity score, transmit data indicating the classification of the obscured object to the mobile device (602), wherein the transceiver (604) is further configured to, upon determining, by the one or more processors, that the highest similarity score does not exceed the threshold similarity score, transmit data indicating unsuccessful classification of the obscured object.

15. A computer program product comprising computer-readable program code to be executed by one or more processors when retrieved from a non-transitory computer-readable medium, the program code including instructions to:
identify (S02) an obscured object (102, 103, 104) in the image (100) by:
classify objects in the image using an image search algorithm having an accuracy threshold value; and
identify the obscured object (102, 103, 104) as an object falling below the accuracy threshold value;
calculate (S04) a 3D coordinate space of the image (100);
define (S06) a 3D coordinate for the obscured object using the 3D coordinate space of the image;
retrieve (S08) a plurality of 3D models of objects from a first database (606);
for each 3D model of the plurality of 3D models:
define a value for a translation parameter and for a scale parameter for the 3D model corresponding to the 3D coordinate of the obscured object (102, 103, 104) in the 3D coordinate space of the image;
for a plurality of values for a rotation parameter of the 3D model:
render a 2D representation of the 3D model having the defined values of the translation parameter and the scale parameter and the value of the rotation parameter
calculate a similarity score between the rendered 2D representation and the obscured object (102, 103, 104)
determine (S10) a highest similarity score calculated for the plurality of 3D models;
upon determining (S11) that the highest similarity score exceeds a threshold similarity score, classify (S12) the obscured object (102, 103, 104) as the object of the 3D model for which the highest similarity score was determined.
